# EUROPEAN PATENT APPLICATION

(11) **EP 4 043 411 A1**
(43) Date of publication of application: **17.08.2022**
(21) Application number: 21461512.2
(22) Date of filing: 12.02.2021
(51) Int. Cl.: C03B 19/10

(54) **A METHOD OF MAKING GLASS MICROSPHERES WITH PREHEATING**

(71) Applicant: NGT Technology Sp. Z o.o., 13-200 Dzialdowo (PL)
(72) Inventor: Omelchuk, Yury, 13-200 Dzialdowo (PL)
(74) Representative: Kancelaria Eupatent.pl Sp. z.o.o

(57) **Abstract**

A method for preliminary heating and aerating a pulverised glass during a process for forming microspheres, characterised by preliminarily heating and aerating the pulverised glass, before introducing the pulverised glass into a high-temperature gas stream of a chamber for forming microspheres, the preliminarily heating and aerating being carried out in a final grinding process by means of a finely grinding fast grinder with spherical or cylindrical grinding media, and having an outlet of the grinder connected to a feeder of the chamber for forming the microspheres.

## Description

### FIELD OF THE INVENTION

The present invention relates to a formation of microspheres, in particular comprising preliminary heating and aerating of a stream of pulverised glass particles.

### PRIOR ART

Russian patent RU2301202 describes a method for preliminary heating of pulverised glass in microsphere and microball formation ovens, which comprises an assembly for heating pulverised glass by means of fuel gas. The heating proceeds through burning a mixture of gas and air, and subsequently by feeding powder to an introducing block, to a gas stream with a high temperature in a formation chamber. A drawback of such a method is that preliminary heating consumes additional energy, harvested from the combustion of fuel gas. Moreover, the transfer of heat to particles of pulverised glass from a heat carrier is a very uneven process, multizonal and quite long-lasting, since the passage time of the powder in such a process is 30 seconds and more. Therefore, heating assemblies have considerable sizes, they are structurally complicated and labour-intensive during operation. Another drawback is in that the outflowing stream of powder particles is excessively aerated by the products of combustion, in order to increase the volumetric mass of the heat carrier between powder particles, in order to supply the necessary amount of heat to the surfaces of the particles. The stream of particles is no longer dense and becomes excessively thin, therefore, having reached the required heating temperature, the overplus of cooling gaseous products of the combustion of the heat carrier needs to be removed before initiating the introduction of the stream of powder particles into a gas stream with a high temperature. In order to discharge the overplus of gaseous combustion products and separate them from the stream of particles of the powder being heated, it is necessary to connect a preliminary heating assembly to a local aspiration system. This is why this heating method is very costly, difficult to control and uneconomical.

It would be desirable to develop a method which would be free of the inconveniences discussed above.

### SUMMARY OF THE INVENTION

The object of the present disclosure is a solution according to the appended claims.

### DETAILED DESCRIPTION

The present invention relates to the chemical industry. It may be used to produce glass microspheres and microballs, used for example to produce transparent, lightweight and cured materials, chemically resilient thermally durable materials, spheroplastics and lightweight materials, for materials absorbing and reflecting sound, for various kinds of filters, for reflective materials and devices, for metal surface machining, for use in medical and cosmetic preparations, etc. The present invention can also be used in devices and ovens for heat treatment of micro-dispersive bulk materials, whose treatment technology comprises the stage of final grinding by means of very fast finely grinding grinders. The method according to the invention is useful for each among horizontal, vertical and inclined ovens and devices for heat treatment of micro-powders.

The object of the present invention is to provide a method for preliminary heating of powder particles, shaping a dense stream of the powder particles, without excessive aeration at an outlet, the stream having the necessary mobility to be introduced into a high-temperature gas stream in a chamber for forming the microspheres, and not requiring additional consumption of energy or the creation of additional devices and systems.

The technical result of the present invention is the reduction of the number of operations in the technological process, the reduction of the energy consumption costs in the technological process, an increase in the performance of the respective glass microspheres, an increase in the performance of the technological process, an improvement in the quality of a process for forming the microspheres.

The technical result is achieved because the preliminary heating, aerating and shaping the dense stream of pulverised glass particles, directly before its introduction into the high-temperature gas stream of the chamber for forming the microspheres, there is used a high-speed grinder with continuous fine grinding, with spherical or cylindrical grinding media; the grinder has with an outlet connected to a feeder of the chamber for forming the microspheres.

The method for preliminary heating and aerating pulverised glass during a process for forming microspheres, characterised by preliminarily heating and aerating the pulverised glass, before introducing the pulverised glass into a high-temperature gas stream of a chamber for forming microspheres, the preliminarily heating and aerating being carried out in a final grinding process by means of a finely grinding fast grinder with spherical or cylindrical grinding media, and having an outlet of the grinder connected to a feeder of the chamber for forming the microspheres.

The method can involve heating the pulverised glass by a horizontal grinder (3) to a temperature of 280÷320°C, in the grinding process .

The method can involve destructive grinding of the powder particles along with aeration of the ground pulverised glass with air present inside a grinding chamber of the grinder.

The method can involve introducing compressed air, preliminarily heated up to 300÷340°C in a heat exchanger 10, into the feeder 4 of the chamber for forming microspheres.

The method can involve introducing the pulverised glass in a form of a stream of the powder particles, from the feeder (4) of the chamber for forming microspheres, into the high-temperature gas stream, in a time fewer than 0.08 seconds.

Moreover, the method can involve by turbulent mixing the stream of the pulverised glass having accelerated the powder particles, with the high-temperature gas stream.

Preferably, the method involves complete forming of the microsphere, at the preliminary heating process.

### SHORT DESCRIPTION OF THE DRAWING

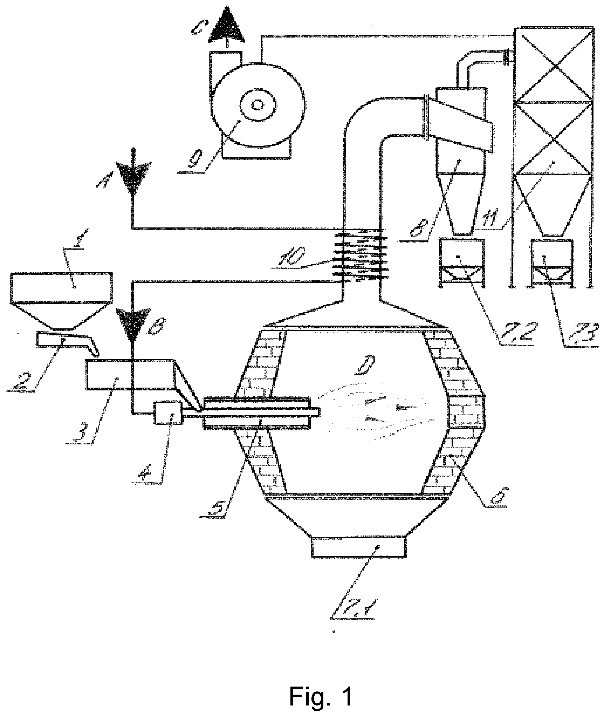

An embodiment of the invention is presented in the drawing, where Fig. 1 presents an exemplary layout of a device for accomplishing the proposed method for preliminary heating and aerating a dense stream of powder particles during the production of glass microspheres and microballs.

### DETAILED DESCRIPTION OF AN EMBODIMENT

The method can be carried out by means of an assembly of devices presented in Fig. 1. In the assembly for forming glass microspheres and microballs, the input element constitutes a supply hopper of glass granules (1), from which the granules are transferred via a feeder - dispenser (2) to a finely grinding grinder (3). The outlet of the grinder (3) is connected by means of a feeder (4) to a burner device (5) of a chamber (6) for forming the microspheres. The formed microspheres are subjected to filtration and ventilation processes in a device (9), which comprises a cyclone separator for separating the microspheres from gaseous combustion products (8), and a filter for separating the microspheres from gaseous combustion products (11). The separated microspheres are transferred to receiving hoppers for the formed microspheres, placed in locations 7.1, 7.2 and 7.3. The discussed technological process for forming the glass microspheres and balls is accompanied by energy processes, initiated by feeding cold compressed air (step A) to a heating-heat exchanger (10), by means of which the air is heated up, and in step B it is fed is by means of the feeder (4) to the chamber (6) for forming the microspheres. The gaseous combustion products generated in the chamber (6) are discharged into the atmosphere in step C. In the final step D, being the stage of forming microspheres, turbulent mixing occurs between the high-temperature gas stream and the particles of the pulverised glass.

The method is accomplished as follows. First, preliminarily fragmented glass granules are placed in the supply hopper 1 to supply the grinder. From the supply hopper, the glass granules are fed to the feeder 2 of the very fast grinder 3, horizontal or vertical, with spherical or cylindrical grinding media for final fine grinding. In order to grind the glass granules to the required particle size of the pulverized glass, the binding energy of the powder particles is released , wherein the particles of pulverised glass are heated up to a temperature of 280÷320°C. At the same time, during the destruction of the powder particles, due to the grinding, the ground particles are aerated with the air present inside a grinding chamber of the grinder. A uniformly aerated and sufficiently mobile stream of pulverised glass particles, is created at the outlet of the grinder; the particles are uniformly heated and uniformly distributed in this stream. Such a state of the stream of particles is maintained for 20÷30 seconds. The outlet of the grinder is connected to the feeder 4 of a device with the chamber for forming the microspheres, the feeder 4 passes through the burner device 5. In order to reduce the density of the aerated stream of powder particles and accelerate the particles to the desired speed, compressed air preliminarily heated up to 300÷340°C in the heat exchanger 10 flows into the feeder 4. Because the stream of powder particles flowing into the feeder 4 is sufficiently aerated, it is accelerated in the feeder 4 to the predetermined speed with minimum resistance. The feeder 4 ensures that the time of introducing the stream of powder particles into the high-temperature gas stream lasts <0.08 seconds. With such a duration of the introduction, this proceeds virtually with no heat loss in the stream of powder particles. The introduction is followed by turbulent mixing between the accelerated stream of powder particles and the high-temperature gas stream . This results in the generation of a thinned stream of particles of pulverised glass having a high temperature, in the chamber 6 for forming microspheres of the device. Such a method for introducing powder into the high-temperature gas stream virtually eliminates the adhesion and creation of clusters of the particles, and the preliminary heating allows for complete formation of the microsphere with minimum energy consumption. The formed microspheres are later introduced into a filtration and ventilation device 9, consisting of a cyclone separator 8 and a separation filter 11, which ensure maintaining the required gas-dynamic operating modes of the chamber for forming microspheres and the filtering cyclone. After separation, the gaseous combustion products are discharged into the atmosphere, and the separated microspheres are fed to the receiving hoppers for the formed microspheres 7.1, 7.2, 7.3.

## Claims

1. A method for preliminary heating and aerating a pulverised glass, during a process for forming microspheres, **characterised by** preliminarily heating and aerating the pulverised glass, before introducing the pulverised glass into a high-temperature gas stream of a chamber for forming microspheres, the preliminarily heating and aerating being carried out in a final grinding process by means of a finely grinding fast grinder with spherical or cylindrical grinding media, and having an outlet of the grinder connected to a feeder of the chamber for forming the microspheres.

2. The method according to claim 1, **characterised by** heating the pulverised glass by a horizontal grinder (3) to a temperature of 280÷320°C, in the grinding process.

3. The method according to claim 1, **characterised by** destructive grinding of the powder particles together with aeration of the ground pulverised glass with air present inside a grinding chamber of the grinder.

4. The method according to claim 1, **characterised by** introducing compressed air, preliminarily heated up to 300÷340°C in a heat exchanger (10), into the feeder (4) of the chamber for forming microspheres.

5. The method according to claim 1, **characterised by** introducing the pulverised glass in a form of a stream of the powder particles, from the feeder (4) of the chamber for forming microspheres, into the high-temperature gas stream, in a time fewer than 0.08 seconds.

6. The method according to claim 1, **characterised by** turbulent mixing the stream of the pulverised glass having accelerated the powder particles, with the high-temperature gas stream.

7. The method according to claim 1, **characterised by** complete forming of the microsphere, at the preliminary heating process.
